# EUROPÄISCHE PATENTSCHRIFT

(11) **EP 2 678 649 B1**
(45) Veröffentlichungstag und Bekanntmachung des Hinweises auf die Patenterteilung: **25.07.2018**
(21) Anmeldenummer: 12704365.1
(22) Anmeldetag: 24.01.2012
(51) Int. Cl.: G01J 5/04, B22D 2/00

(54) **SENSORANORDNUNG ZUR MESSUNG VON PARAMETERN IN SCHMELZEN**
SENSOR ARRANGEMENT FOR MEASURING PARAMETERS IN MELTS
ENSEMBLE CAPTEUR POUR LA MESURE DE PARAMÈTRES DANS DES PRODUITS EN FUSION

(30) Priorität: 23.02.2011 DE 102011012175
(43) Veröffentlichungstag der Anmeldung: 01.01.2014
(73) Patentinhaber: Heraeus Electro-Nite International N.V., 3530 Houthalen (BE)
(72) Erfinder: CUYPERS, Jan, B-3500 Kermt (BE); INDEHERBERGE, Valère, B-3520 Zonhoven (BE)
(74) Vertreter: Heraeus IP
(86) Internationale Anmeldenummer: PCT/EP2012/000303
(87) Internationale Veröffentlichungsnummer: WO 2012/113498

(56) Entgegenhaltungen:
- EP-A2- 1 614 758
- DE-B1- 2 929 693
- DE-C2- 4 433 685
- JP-A- 7 229 791
- JP-A- 7 318 433

## Beschreibung

Die Erfindung betrifft eine Sensoranordnung zur Messung von Parametern in Schmelzen, insbesondere zur Messung der Temperatur, insbesondere in Metall- oder Kryolithschmelzen mit einem Schmelzpunkt oberhalb 500 °C, mit einem Oberteil und einem an dem Oberteil lösbar angeordneten Unterteil. Metallschmelzen können beispielsweise Stahl- oder Eisenschmelzen sein.

Ähnliche Sensoranordnungen sind unter anderem aus DE 44 33 685 C2 bekannt. Dort ist beschrieben, dass an einem Trägerkörper ein Thermoelement angeordnet ist. Dieses Thermoelement ragt in einen Behälter hinein, in dem die Abkühlungstemperatur der Schmelze gemessen wird. Weitere Sensoranordnungen zum Messen von Temperaturen in Schmelzen sind unter anderem aus DE 103 31 124 B3 bekannt, wobei Glasfasern als Sensorelement benutzt werden. In EP 1 034 419 B1 ist des Weiteren eine Sensoranordnung beschrieben, die ähnlich wie DE 44 33 685 C2 ein Thermoelement benutzt. Ein weiterer Temperatursensor ist beispielsweise aus JP 07 229 791 A bekannt. Hier wird eine Glasfaser zur Messung verwendet, die die Strahlung aus der Schmelze aufnimmt und an einer Auswerteeinheit weiterleitet, in der aus der aufgenommenen Strahlung die Temperatur in bekannter Weise bestimmt wird. Aus JP 7 318433 A ist eine Temperaturmesseinrichtung mit einem einem Thermoelement und einem mehrteiligen Schutzkörper bekannt. Eine Temperaturmesseinrichtung, bei der eine Lichtleitfaser in eine Metallschmelze getaucht wird, ist aus JP 229791 A bekannt. Ferner wird in EP 1 614 758 A2 eine Messeinrichtung mit Signalleitungen und einer Probenkammer offenbart.

Aufgabe der vorliegenden Erfindung ist es, die vorhandenen Vorrichtungen zu verbessern und deren Betriebssicherheit weiter zu vereinfachen.

Die Aufgabe wird durch die Merkmale des unabhängigen Anspruchs gelöst. Vorteilhafte Ausgestaltungen sind in den abhängigen Ansprüchen angegeben. Dadurch, dass an einem dem Oberteil abgewandten Eintauchende des Unterteils ein koaxial zu einer Längsachse des Unterteils verlaufendes Rohr angeordnet ist, das an seinem dem Oberteil abgewandten Ende geschlossen und an dem anderen Ende offen ist, dass in dem Oberteil ein koaxial zu einer Längsachse des Oberteils verlaufendes, beidseitig offenes Führungsrohr in einer Führungshülse (insbesondere in Längsachsenrichtung) beweglich angeordnet ist, dass das Führungsrohr mittels eines elastischen Körpers mit einem in Richtung Unterteils wirkenden Drucks beaufschlagt ist und an dem Unterteil anliegt und dass eine Öffnung des Führungsrohrs und das offene Ende des Rohrs des Unterteils zueinander benachbart koaxial zur Längsachse des Unterteils angeordnet sind, ist zum einem die Aufnahme und Weiterleitung von Lichtstrahlung zur Auswertung sich aus der Strahlung ergebenden Temperatur (oder anderer Parameter wie Gehalt an Zusatzstoffen) einer Schmelze einfach möglich. Zum anderen kann eine in dem Führungsrohr des Oberteils und dem Rohr des Unterteils angeordnete Lichtleitfaser sehr einfach für mehrere Messzyklen verwendet werden.

Die zur Lichtleitung und daraus erfolgenden Temperatur- beziehungsweise Parameterbestimmung verwendete Lichtleitfaser wird nämlich im Allgemeinen von einer Rolle abgewickelt und durch die Sensoranordnung hindurch bis an ihre Spitze geführt. Die Lichtleitfaser weist einen Kern aus Glas, vorzugsweise Quarzglas auf, der von einem Metallmantel umgeben ist, der die Handhabung des Glases überhaupt erst ermöglicht und beispielsweise das unbeabsichtigte Brechen des Glases verhindern soll. Dazu ist der Kern eng von dem Metallmantel, in der Regel Stahlmantel, umgeben. Derartige Lichtleitfasern sind handelsüblich. Für eine Messung wird die Lichtleitfaser durch die Sensoranordnung hindurch bis in die Spitze des Rohres des Unterteils, also bis an sein geschlossenes Ende herangeführt. Die Sensoranordnung wird mit ihrem Eintauchende in die Schmelze eingetaucht, wobei sich insbesondere das eintauchende Unterteil aufheizt bis auf eine Gleichgewichtstemperatur mit der Schmelze. Die Strahlung der Schmelze wird durch das Ende der Lichtleitfaser aufgenommen und zur Auswertung weitergeleitet.

Bei Messungen in Hochtemperaturschmelzen, wie Kryolith- oder Stahlschmelzen, wird das der Schmelze ausgesetzte Ende der Lichtleitfaser durch die Temperatureinwirkung beschädigt, so dass es in der Regel nicht mehrfach für zuverlässige Messungen verwendet werden kann. Deshalb wird nach der Messung, nach dem Herausziehen der Sensoranordnung aus der Schmelze, das Unterteil vom Oberteil getrennt. Dabei wird das Führungsrohr durch den Druck des elastischen Körpers um eine Strecke, die durch die Anordnung des Führungsrohres im Oberteil, speziell durch die Anordnung von mechanischen Anschlägen bestimmt wird, aus dem Oberteil herausgeschoben. Diese Strecke kann beispielsweise 1 - 5 cm betragen. Die Lichtleitfaser, die ursprünglich bis an die Spitze des Rohres des Unterteils aus dem Oberteil herausgeschoben wurde, wird dabei um die Bewegungsstrecke des Führungsrohrs von diesem umgeben und dabei mechanisch stabilisiert. Das dabei noch aus dem Führungsrohr herausragende Ende der Lichtleitfaser kann dann auf einfache Weise, beispielsweise durch seitliche, mechanische Einwirkung, also durch Verbiegen, abgebrochen werden. Danach steht ein unbeschädigtes neues Ende der Lichtleitfaser für eine weitere Messung zur Verfügung. Ein Unterteil wird dafür auf das Oberteil aufgesteckt, die Lichtleitfaser wird durch die Sensoranordnung hindurch bis in die Spitze des Rohres des Unterteils geführt und die Messung kann erfolgen.

Die Länge des abzubrechenden Endes der Lichtleitfaser wird dabei durch die Länge des Rohres des Unterteils und die unter dem Druck des elastischen Körpers erfolgende Bewegung der Führungshülse wesentlich bestimmt. Damit das Abbrechen ohne wesentliche Verformung der Lichtleitfaser an der Bruchstelle erfolgen kann, ist der Innendurchmesser des Führungsrohres einerseits groß genug, dass ein problemloser Vorschub der Lichtleitfaser erfolgen kann, andererseits ist er jedoch nicht wesentlich größer als der Außendurchmesser der Lichtleitfaser, um ein Verbiegen der Lichtleitfaser an der Spitze des Führungsrohres beim Abbrechen weitestgehend zu verhindern und dabei zu sichern, dass der Querschnitt der Lichtleitfaser einschließlich des Metallmantels an der Bruchstelle im Wesentlichen erhalten bleibt. Dabei hat sich eine Differenz zwischen den beiden Durchmessern von etwa 0,5 mm oder sogar weniger als 0,5 mm als geeignet erwiesen. Der Vorschub des Führungsrohres wird, wie bereits beschrieben, durch die konkrete Konstruktion des Oberteils begrenzt, so dass er so eingerichtet werden kann, dass so wenig wie möglich von der Lichtleitfaser abgebrochen wird, um die Kosten zu senken.

Die Sensoranordnung ist vorzugsweise derart ausgebildet, dass der elastische Körper als Schraubenfeder ausgebildet ist, die konzentrisch um die Längsachse des Oberteils angeordnet sein kann. Dadurch erfolgt ein gleichmäßiger Druck auf das Führungsrohr, so dass dieses nicht verkanten und sich verklemmen kann. Das dem Unterteil abgewandte Ende des Führungsrohrs ist zweckmäßiger Weise in einem Gehäuse angeordnet, das das elastische Element umgibt. Dadurch ist eine Beschädigung des Bewegungsmechanismus von außen wirkungsvoll zu verhindern. Die stirnseitigen Abschlüsse der Innenseite des Gehäuses können den Federweg des elastischen Körpers und damit die Bewegung des Führungsrohrs bestimmen.

Vorteilhaft ist, dass das elastische Element, vorzugsweise innerhalb des Gehäuses, an einem Kragen des Führungsrohrs anliegt, so dass ein gleichmäßiger Druck auf das Führungsrohr wirkt. Dieser Kragen kann gleichzeitig als umlaufende Wulst ausgebildet sein mit einer dem elastischen Körper abgewandten Anschlagsseite, die gegen eine Anschlagsfläche des Gehäuses des Oberteils gedrückt ist, wenn das Führungsrohr sich in seiner ausgeschobenen Position befindet. Das Gehäuse kann also zylinderförmig um die Längsachse des Oberteils herum ausgebildet sein, wobei seine dem Unterteil zugewandte Stirnseite eine Öffnung für das Führungsrohr aufweist, durch das die Lichtleitfaser geführt wird, wobei die gegenüberliegende Stirnseite eine weitere Öffnung für die Lichtleitfaser aufweist.

Vorzugsweise sind das Oberteil und das Unterteil mittels jeweils eines Verbindungsteils miteinander verbunden. Dabei ist es zweckmäßig, dass mindestens eines der Verbindungsteile mindestens eine Nut und mindestens das andere Verbindungsteil mindestens eine Wulst aufweisen, wobei eine Wulst des einen Verbindungsteils und mindestens eine Nut des anderen Verbindungsteils ineinander greifen. Dadurch ist eine Art Clipverbindung realisierbar, die durch Druck der beiden Teile (Oberteil und Unterteil) gegeneinander erzielt und durch entgegengesetzt wirkende Zugkraft gelöst werden kann. Dazu ist mindestens eines der Verbindungsteile aus einem elastischen Material gebildet.

Eines der Verbindungsteile ist zweckmäßiger Weise an seinem dem anderen Verbindungsteil zugewandten Ende rohrförmig ausgebildet, wobei das Rohr auch in Längsrichtung mehrere Schlitze aufweisen kann, um die zum Aufeinanderstecken und Lösen benötigte Elastizität zu gewährleisten, wobei dieses Rohr das andere Verbindungsteil an seinem ihm zugewandten Ende umgreift. Dieses andere, von dem rohrförmigen Verbindungsteil umfasste Verbindungsteil kann ebenfalls als Rohr ausgebildet sein.

Zweckmäßig ist es, dass das an dem Unterteil der Sensoranordnung angeordnete Verbindungsteil einen axial-symmetrischen Konus aufweist, dessen kleinerer Durchmesser benachbart zu dem offenen Ende des Rohrs des Unterteils angeordnet ist. In das Ende des Konus mit dem größeren Durchmesser kann beim Verbinden von Oberteil und Unterteil das ihm zugewandte, vorzugsweise ebenfalls konisch ausgebildete Ende des Führungsrohres eingreifen, so dass dieses zusätzlich zentriert wird und der Vorschub der Lichtleitfaser nicht durch Stufen oder ähnliches behindert wird.

Mindestens eine Nut und mindestens eine Wulst verlaufen zweckmäßiger Weise um die Längsachsen von Oberteil und Unterteil herum, so dass eine zusätzliche axial-symmetrische Führung und ein gleichmäßiger Druck gewährleistet ist und Oberteil und Unterteil nicht gegeneinander verkanten. Die Führung der Lichtleitfaser kann dadurch verbessert werden.

Wesentlich ist es, dass an dem dem Oberteil abgewandten Ende des Unterteils ein eine Einlauföffnung für die Schmelze aufweisender Behälter angeordnet ist, in den das geschlossene Ende des Rohres des Unterteils hineinragt. In diesem Behälter kann Schmelze zur Messung der Liquiduskurve aufgenommen werden. Der Behälter ist an seinem dem Unterteil abwandten Enden geschlossen und weist eine Einlauföffnung auf, die seitlich oder in Richtung des Unterteils weisend angeordnet sein kann. Es ist auch wesentlich, dass das Rohr des Unterteils durch die Einlauföffnung des Behälters verläuft.

Der Behälter ist vorzugsweise konzentrisch um das Rohr des Unterteils herum angeordnet und weist an seinem dem Unterteil abgewandten Ende ein geschlossenes Ende auf. Das dem Unterteil der Sensoranordnung zugewandte Ende kann offen sein. Es ist jedoch auch möglich, beide Enden zu schließen und eine seitliche Öffnung in der Mantelfläche des Behälters anzuordnen. Der Behälter ist zweckmäßig thermisch möglichst gut von dem Unterteil entkoppelt. Dies kann in dem Fachmann bekannter Weise durch einzelne Stege erfolgen, die um die Längsachse des Behälters beziehungsweise des Unterteils herum angeordnet sind und den Behälter mit dem Unterteil verbinden. Je geringer die Querschnittsfläche der Stege insgesamt ist, desto besser ist die thermische Entkopplung.

Vorteilhaft ist es ferner, dass das dem Unterteil abgewandte Ende des Oberteils an einem Trägerrohr oder einer Tauchlanze angeordnet ist, so dass die Sensoranordnung auf einfache Weise in die Schmelze eingetaucht und aus ihr wieder herausgezogen werden kann. Das Gehäuse kann dabei mit der Tauchlanze oder dem Trägerrohr direkt verbunden sein. Hierzu sind Steckverbinder (sogenannte Kontaktstücke) hinreichend bekannt, deren Kontakte an den jeweiligen Anwendungsfall angepasst sind, so dass neben einer mechanischen Verbindung elektrische und/oder optische Kontakte vorgesehen sein können. Damit können außer optischen Signalen auch elektrische Signale, die zum Beispiel von Thermoelementen oder elektrochemischen Sensoren gewonnen werden, weitergeleitet werden.

Zum Schutz des Eintauchendes während des Eintauchens selbst kann an dem Eintauchende eine Schutzkappe in an sich bekannter Art vorgesehen sein, die das geschlossene Ende des Rohres des Unterteils und gegebenenfalls die Anordnung des Behälters vor mechanischer Beschädigung während des Eintauchens in die Schmelze schützt.

Erfindungsgemäß ist des Weiteren ein Oberteil, welches zur Verwendung in einer oben beschriebenen Sensoranordnung vorgesehen ist, sowie ein Unterteil, welches zur Verwendung mit einem solchen Oberteil vorgesehen ist.

Nachfolgend wird die Erfindung beispielhaft anhand von Zeichnungen beschrieben. In den Zeichnungen zeigt
- Figur 1: eine Übersichtsdarstellung einer Tauchlanze
- Figur 2: einen Querschnitt durch Oberteil und Unterteil der Sensoranordnung, wobei beide Teile getrennt sind
- Figur 3: den Querschnitt der Sensoranordnung
- Figur 4: den Querschnitt der Sensoranordnung mit eingeschobener Lichtleitfaser
- Figur 5: die Sensoranordnung nach Trennen des Oberteils vom Unterteil nach der Messung und
- Figur 6: das Abbrechen des Endes der Lichtleitfaser.

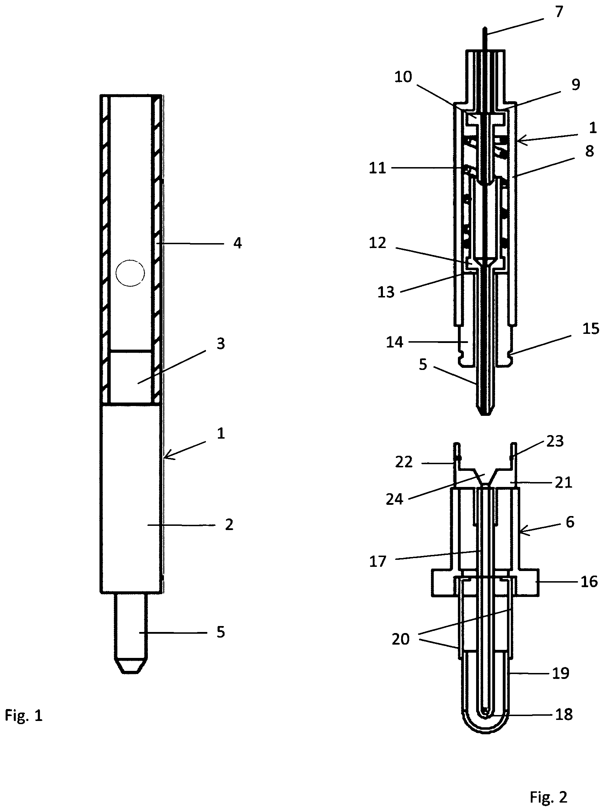

In Figur 1 ist eine Übersicht der erfindungsgemäßen Sensoranordnung schematisch dargestellt. Das Oberteil 1 ist im Wesentlichen gebildet aus dem Kontaktblock 2, der gleichzeitig an seinem dem Eintauchende abgewandten Ende über Kontaktstücke 3 mit der Lanze 4 verbunden ist und auch das Gehäuse umfasst, das an seinem Eintauchende das mit Federspannung beaufschlagte Führungsrohr 5 erkennen lässt.

In Figur 2 ist ein Querschnitt durch das Oberteil 1 und das Unterteil 6 dargestellt. Aus dem Unterteil 1 ragt an seinem oberen Ende, durch die Kontaktstücke hindurch, die Lichtleitfaser 7 hindurch. Die Lichtleitfaser 7 wird von einer Rolle kommend durch die Lanze 4 hindurchgeführt bis in das Unterteil 6 hinein. Das Oberteil 1 ist zum großen Teil als eine Art Gehäuse ausgebildet, welches einen Hohlraum zur Aufnahme eines Abschnitts der Lichtleitfaser, des einen Endes des Führungsrohres 5 sowie einer Schraubenfeder 11 bildet.

Das Gehäuse 8 ist aus einer Stahlhülle gebildet, die an ihrer oberen Stirnseite 9 einen umlaufenden Anschlag 10 für das obere Ende der Schraubenfeder 11 aufweist. Das untere Ende der Schraubenfeder 11 drückt gegen einen Anschlag 12 des Führungsrohres 5, so dass das Führungsrohr 5 im dargestellten Zustand der Anordnung, also bei gelöster Verbindung zwischen Oberteil 1 und Unterteil 6, in seiner ausgeschobenen Position ist, wobei das Ausschieben durch den Anschlag 12 begrenzt ist, der an der im Gehäuse angeordneten unteren Stirnseite 13 des Gehäuses anliegt. Die untere Stirnseite 13 wird im dargestellten Beispiel durch die obere Begrenzung des Verbindungsteils 14 des Oberteils 1 dargestellt. An seinem entgegengesetzten Ende weist das Verbindungsteil 14 eine umlaufende Nut 15 auf.

Das Unterteil 6 weist einen Körper 16 aus Keramik auf. Durch den Körper 16 hindurch verläuft das Rohr 17, das an seinem Eintauchende 18 geschlossen ist. An dem Eintauchende 18 ist das Rohr von einem Probenbehälter 19 umgeben, der durch Stege 20 mit dem Körper verbunden ist. An seinem dem Eintauchende abgewandten Ende ist an dem Unterteil 6 ein Verbindungsteil 21 angeordnet, welches an seinem rohrförmigen Ende 22 auf das Verbindungsteil 14 des Oberteils 1 aufgesteckt werden kann. Dazu ist an seiner Innenseite des rohrförmigen Endes 22 eine umlaufende Wulst 23 angeordnet, die im zusammengesteckten Zustand in die umlaufende Nut 15 eingreift.

Das Verbindungsteil 21 weist einen koaxialen Konus 24 auf, dessen Ende mit dem geringeren Durchmesser an dem offenen Ende des Rohres 17 anliegt und der mit seinem größeren Ende das ebenfalls konisch ausgebildete Ende des Führungsrohres 5 aufnehmen kann. Das Rohr 17 kann aus Stahl oder Kupfer oder Quarzglas gebildet sein, der Behälter 19 und die Stege 20 können aus Stahl gebildet sein. Der Behälter 19 kann ein Volumen von etwa 4 cm³ aufweisen bei einer Höhe von etwa 28 mm und einem Innendurchmesser von etwa 14 mm.

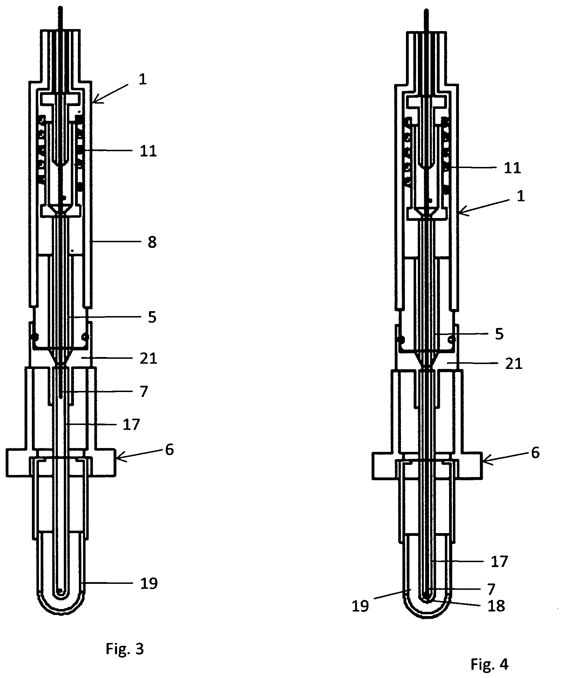

Figur 3 zeigt das auf das Oberteil 1 aufgesteckte Unterteil 6, wobei das dem Eintauchende zugewandte Ende des Führungsrohrs 5 in das Gehäuse 8 des Oberteils 1 hineingedrückt wird. Die Schraubenfeder 11 wird dabei zusammengedrückt. Bei dem Vorgang des Ineinanderschiebens von Oberteil 1 und Unterteil 6, also beim Zusammendrücken der Schraubenfeder 11, wird das dem Eintauchende der Sensoranordnung zugewandte Ende der Lichtleitfaser 7 in das Rohr 17 einige Millimeter hineingeschoben. Wenn beim Vorgang des Eintauchens der Sensoranordnung in die Schmelze eine Temperatur (Strahlung) von etwa 350 °C bis 800 °C, beispielsweise von 500 °C, erreicht ist, kann die Lanze 4 auf an sich bekannte Weise in Vibration versetzt werden, wobei die Vibration automatisch bei Erreichen der festgelegten Temperatur gestartet werden kann. Mit der Vibration kann eine automatische Zuführung der Lichtleitfaser 7 in das Rohr 17 erfolgen. Für die Messung wird die Lichtleitfaser 7 bis an das geschlossene Eintauchende 18 des Rohres 17 nachgeführt. Dabei ragt es etwa 60 mm aus dem Führungsrohr 5 des Oberteils 1 heraus. Die zusammengesteckte Anordnung ist in den Figuren 3 beziehungsweise 4 dargestellt, wobei Figur 4 die vorgeschobene Lichtleitfaser 7 zeigt.

Mit der in Figur 4 dargestellten Anordnung erfolgt nach Eintauchen der Sensoranordnung in die Schmelze eine Probennahme in dem Probenbehälter 19. Danach wird die Sensoranordnung aus der Schmelze herausgezogen und die Abkühlkurve kann mittels der Lichtleitfaser bestimmt werden. Während des Vorgangs kann die Sensoranordnung über die Lanze 4 in an sich bekannter Weise einer Vibration ausgesetzt werden. Natürlich kann auch nur die Temperatur der Schmelze gemessen werden. Ein Behälter wird dabei nicht benötigt. Die von der Schmelze abgegebene Strahlung wird von der Lichtleitfaser erfasst und an einen Detektor weitergeleitet. Aus der Strahlung wird die Temperatur in bekannter Weise bestimmt.

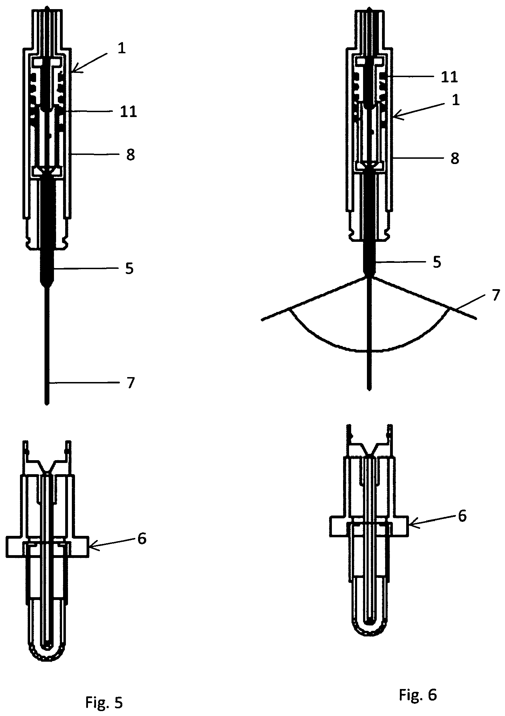

In den Figuren 5 und 6 ist die Sensoranordnung nach der Messung dargestellt. Oberteil 1 und Unterteil 6 wurden getrennt, um ein bei der Messung verbrauchtes Unterteil 6 gegen ein neues auszutauschen. Bei der Trennung des Unterteils 6 vom Oberteil 1 lässt der Druck auf die Schraubenfeder 11 nach, so dass das Führungsrohr 5 aus dem Gehäuse 8 um etwa 2 cm herausgedrückt wird. Die Lage der Lichtleitfaser 7 verändert sich dabei nicht, so dass das aus dem Führungsrohr 5 herausragende Ende der Lichtleitfaser 7 durch den Vorschub der Führungsrohres 5 verkürzt wird. Anschließend wird das aus dem Führungsrohr 5 herausragende, jetzt um den Vorschub des Führungsrohres verkürzte Ende der Lichtleitfaser 7 manuell durch Hin- und Herbewegung an der Spitze des Führungsrohres 5 abgebrochen.

Das abgebrochene Ende der Lichtleitfaser 7 wurde während des Messvorganges zumindest teilweise in seiner Struktur beschädigt, so dass es für eine weitere Messung nicht mehr nutzbar ist. Durch den Vorschubmechanismus für das Führungsrohr 5 wird das abzubrechende Ende der Lichtleitfaser 7 auf ein möglichst geringes Maß beschränkt, so dass möglichst wenig von dem intakten Teil der Lichtleitfaser verworfen wird.

Danach kann ein neues Unterteil 6 auf das Oberteil 1 aufgesteckt werden und ein neuer Messvorgang erfolgen.

## Patentansprüche

1. Sensoranordnung zur Messung von Parametern in Schmelzen, insbesondere zur Messung der Temperatur, insbesondere in Metall- oder Kryolithschmelzen mit einem Schmelzpunkt oberhalb 500 °C, mit einem Oberteil (1) und einem an dem Oberteil (1) lösbar angeordneten Unterteil (6), wobeian einem dem Oberteil (1) abgewandten Eintauchende des Unterteils (6) ein koaxial zu einer Längsachse des Unterteils (6) verlaufendes Rohr (17) angeordnet ist, das an seinem dem Oberteil (1) abgewandten Ende geschlossen und an dem anderen Ende offen ist, wobei in dem Oberteil (1) ein koaxial zu einer Längsachse des Oberteils (1) verlaufendes, beidseitig offenes Führungsrohr (5) in einer Führungshülse beweglich angeordnet ist, wobei das Führungsrohr (5) mittels eines elastischen Körpers mit einem in Richtung des Unterteils (6) wirkenden Drucks beaufschlagt ist und an dem Unterteil (6) anliegt und dass eine Öffnung des Führungsrohrs (5) und das offene Ende des Rohrs (17) des Unterteils (6) zueinander benachbart koaxial zur Längsachse des Unterteils (6) angeordnet sind, **dadurch gekennzeichnet, dass** in dem Führungsrohr (5) des Oberteils (1) und dem Rohr (17) des Unterteils (6) eine Lichtleitfaser (7) angeordnet ist, dass an dem dem Oberteil (1) abgewandten Ende des Unterteils (6) ein eine Einlauföffnung für die Schmelze aufweisender Behälter (19) angeordnet ist, in den das geschlossene Ende des Rohres (17) des Unterteils (6) hineinragt und dass das Rohr (17) des Unterteils (6) durch die Einlauföffnung des Behälters (19) verläuft.

2. Sensoranordnung nach Anspruch 1, **dadurch gekennzeichnet, dass** der elastische Körper als Schraubenfeder (11) ausgebildet ist, die konzentrisch um die Längsachse des Oberteils (1) angeordnet ist.

3. Sensoranordnung nach Anspruch 1 oder 2, **dadurch gekennzeichnet, dass** das dem Unterteil (6) abgewandte Ende des Führungsrohrs (5) in einem Gehäuse (8) angeordnet ist, das das elastische Element umgibt.

4. Sensoranordnung nach mindestens einem der Ansprüche 1 - 3, **dadurch gekennzeichnet, dass** das elastische Element an einem Kragen des Führungsrohrs (5) anliegt.

5. Sensoranordnung nach mindestens einem der Ansprüche 1 - 4, **dadurch gekennzeichnet, dass** das Oberteil (1) und das Unterteil (6) mittels jeweils eines Verbindungsteils (14;21)miteinander verbunden sind.

6. Sensoranordnung nach Anspruch 5, **dadurch gekennzeichnet, dass** mindestens eines der Verbindungsteile (14) mindestens eine Nut (15) und mindestens das andere Verbindungsteil (21) mindestens eine Wulst (23) aufweisen, wobei mindestens eine Wulst (23) des einen Verbindungsteils (21) und mindestens eine Nut (15) des anderen Verbindungsteils (14) ineinandergreifen.

7. Sensoranordnung nach Anspruch 6, **dadurch gekennzeichnet, dass** die mindestens eine Nut (15) und die mindestens eine Wulst (23) um die Längsachsen von Oberteil (1 und Unterteil (6) herum verlaufend angeordnet sind.

8. Sensoranordnung nach mindestens einem der Ansprüche 1 - 7, **dadurch gekennzeichnet, dass** das dem Unterteil (6) abgewandte Ende des Oberteils (1) an einem Trägerrohr oder einer Tauchlanze angeordnet ist.

## Claims

1. A sensor arrangement for the measurement of parameters in melts, more particularly for the measurement of the temperature, more particularly in molten metals or cryolite melts having a melting point above 500 °C, comprising an upper part (1) and a lower part (6) detachably arranged on the upper part (1), wherein a pipe (17) running coaxially with a longitudinal axis of the lower part (6) is arranged at an immersion end of the lower part (6) facing away from the upper part (1), said pipe (17) being closed at its end facing away from the upper part (1) and being open at the other end, wherein, in the upper part (1), a guide pipe (5) that is running coaxially with a longitudinal axis of the upper part (1) and is open on either side is movably arranged in a guide sleeve, wherein a pressure acting in the direction of the lower part (6) is applied to the guide pipe (5) by means of an elastic body and the guide pipe (5) rests against the lower part (6), and that an opening of the guide pipe (5) and the open end of the pipe (17) of the lower part (6) are arranged neighbouring each other and coaxially with the longitudinal axis of the lower part (6), **characterised in that** an optical fibre (7) is arranged in the guide pipe (5) of the upper part (1) and the pipe (17) of the lower part (6), that a container (19) having an inlet opening for the melt is arranged at the end of the lower part (6) facing away from the upper part (1), with the closed end of the pipe (17) of the lower part (6) projecting into said container (19), and that the pipe (17) of the lower part (6) extends through the inlet opening of the container (19).

2. The sensor arrangement in accordance with Claim 1, **characterised in that** the elastic body is designed as a helical spring (11) which is arranged concentrically about the longitudinal axis of the upper part (1).

3. The sensor arrangement in accordance with Claim 1 or 2, **characterised in that** the end of the guide pipe (5) facing away from the lower part (6) is arranged in a housing (8) which surrounds the elastic element.

4. The sensor arrangement in accordance with at least any one of Claims 1 to 3, **characterised in that** the elastic element rests against a collar of the guide pipe (5).

5. The sensor arrangement in accordance with at least any one of Claims 1 to 4, **characterised in that** the upper part (1) and the lower part (6) are connected to each other by means of one connecting part (14; 21) each.

6. The sensor arrangement in accordance with Claim 5, **characterised in that** at least one of the connecting parts (14) has at least one groove (15) and at least the other connecting part (21) has at least one ridge (23), wherein at least one ridge (23) of the one connecting part (21) and at least one groove (15) of the other connecting part (14) engage each other.

7. The sensor arrangement in accordance with Claim 6, **characterised in that** the at least one groove (15) and the at least one ridge (23) are arranged such that they extend around the longitudinal axes of the upper part (1) and the lower part (6).

8. The sensor arrangement in accordance with at least any one of Claims 1 to 7, **characterised in that** the end of the upper part (1) facing away from the lower part (6) is arranged on a support pipe or an immersion lance.

## Revendications

1. Agencement de capteurs pour la mesure de paramètres dans des masses fondues, notamment pour la mesure de la température, notamment dans des masses fondues métalliques ou de cryolithe avec un point de fusion supérieur à 500°C, avec une partie supérieure (1) et une partie inférieure (6) disposée de manière amovible au niveau de la partie supérieure (1), dans lequel un tuyau (17) s'étendant de manière coaxiale à un axe longitudinal de la partie inférieure (6) est disposé à une extrémité d'immersion de la partie inférieure (6) détournée de la partie supérieure (1), lequel est fermé à son extrémité détournée de la partie supérieure (1) et ouvert à l'autre extrémité, dans lequel un tuyau de guidage (5) s'étendant de manière coaxiale à un axe longitudinal de la partie supérieure (1), ouvert des deux côtés, est disposé de manière mobile dans un manchon de guidage dans la partie supérieure (1), dans lequel le tuyau de guidage (5) est sollicité au moyen d'un corps élastique avec une pression agissant en direction de la partie inférieure (6) et repose sur la partie inférieure (6), et qu'une ouverture du tuyau de guidage (5) et l'extrémité ouverte du tuyau (17) de la partie inférieure (6) sont disposées de manière adjacente l'une à l'autre de manière coaxiale à l'axe longitudinal de la partie inférieure (6), **caractérisé en ce qu'**une fibre optique (7) est disposée dans le tuyau de guidage (5) de la partie supérieure (1) et le tuyau (17) de la partie inférieure (6), qu'un récipient (19) présentant une ouverture d'entrée pour la masse fondue, dans lequel s'avance l'extrémité fermée du tuyau (17) de la partie inférieure (6), est disposé à l'extrémité de la partie inférieure (6) détournée de la partie supérieure (1), et que le tuyau (17) de la partie inférieure (6) s'étend à travers l'ouverture d'entrée du récipient (19).

2. Agencement de capteurs selon la revendication 1, **caractérisé en ce que** le corps élastique est réalisé en tant que ressort hélicoïdal (11) qui est disposé de manière concentrique autour de l'axe longitudinal de la partie supérieure (1).

3. Agencement de capteurs selon la revendication 1 ou 2, **caractérisé en ce que** l'extrémité du tuyau de guidage (5) détournée de la partie inférieure (6) est disposée dans un logement (8) qui entoure l'élément élastique.

4. Agencement de capteurs selon au moins une des revendications 1 à 3, **caractérisé en ce que** l'élément élastique repose sur un rebord du tuyau de guidage (5).

5. Agencement de capteurs selon au moins une des revendications 1 à 4, **caractérisé en ce que** la partie supérieure (1) et la partie inférieure (6) sont reliées l'une à l'autre au moyen à chaque fois d'une partie de connexion (14 ; 21).

6. Agencement de capteurs selon la revendication 5, **caractérisé en ce qu'**au moins une des parties de connexion (14) présente au moins une rainure (15) et au moins l'autre partie de connexion (21) présente au moins un bourrelet (23), dans lequel au moins un bourrelet (23) d'une des parties de connexion (21) et au moins une rainure (15) de l'autre partie de connexion (14) s'engrènent l'un dans l'autre.

7. Agencement de capteurs selon la revendication 6, **caractérisé en ce que** l'au moins une rainure (15) et l'au moins un bourrelet (23) sont disposés en s'étendant autour des axes longitudinaux de la partie supérieure (1) et de la partie inférieure (6).

8. Agencement de capteurs selon au moins une des revendications 1 à 7, **caractérisé en ce que** l'extrémité de la partie supérieure (1) détournée de la partie inférieure (6) est disposée sur un tuyau de support ou une lance d'immersion.
